# EUROPÄISCHE PATENTSCHRIFT

(11) **EP 1 565 665 B1**
(45) Veröffentlichungstag und Bekanntmachung des Hinweises auf die Patenterteilung: **09.01.2008**
(21) Anmeldenummer: 03767661.6
(22) Anmeldetag: 26.11.2003
(51) Int. Cl.: F16D 48/06

(54) **EINRICHTUNG ZUR ERHÖHUNG DER FUNKTIONSSICHERHEIT FüR EINEN HYDRAULIKKREIS EINER HYDRAULISCH BETÄTIGBAREN KUPPLUNG**
DEVICE FOR INCREASING THE FUNCTIONAL RELIABILITY OF A HYDRAULIC CIRCUIT OF A HYDRAULICALLY OPERABLE CLUTCH
DISPOSITIF DESTINE A ACCROITRE LA SECURITE DE FONCTIONNEMENT D'UN CIRCUIT HYDRAULIQUE D'UN EMBRAYAGE A COMMANDE HYDRAULIQUE

(30) Priorität: 29.11.2002 DE 10255713
(43) Veröffentlichungstag der Anmeldung: 24.08.2005
(73) Patentinhaber: ZF FRIEDRICHSHAFEN Aktiengesellschaft, 88038 Friedrichshafen (DE)
(72) Erfinder: KNOBLAUCH, Thomas, 66123 Saarbrücken (DE); RÜCHARDT, Christoph, 88131 Bodolz (DE); EBNER, Otto, 88048 Friedrichshafen (DE); SCHWEIGER, Klaus, 88046 Friedrichshafen (DE); WINKEL, Matthias, 88250 Weingarten (DE); SCHWENGER, Andreas, 38446 Wolfsburg/Reislingen (DE); GANSOHR, Marcus, 88682 Salem (DE)
(86) Internationale Anmeldenummer: PCT/EP2003/013271
(87) Internationale Veröffentlichungsnummer: WO 2004/051109

(56) Entgegenhaltungen:
- EP-A- 0 386 330
- EP-A- 0 984 185
- GB-A- 936 475
- GB-A- 2 295 435
- US-A- 3 812 942
- US-A- 5 042 631
- US-A- 5 847 272

## Beschreibung

Die Erfindung betrifft eine Einrichtung zur Erhöhung der Funktionssicherheit für einen Hydraulikkreis einer hydraulisch betätigbaren Kupplung gemäß dem Oberbegriff des Anspruchs 1 bzw. des Anspruchs 7.

Eine Erhöhung der Funktionssicherheit des Hydraulikkreises einer hydraulisch betätigbaren Kupplung zielt generell darauf ab, den jeweiligen Schaltzustand der Kupplung aufrechtzuerhalten und zwischen den Schaltzuständen ein definiertes Übergangsverhalten zu erreichen, das reproduzierbar und damit für den Fahrer des betreffenden Fahrzeuges gut beherrschbar ist.

Zur Erfüllung dieser Forderungen sind Druckverstärker aus dem Stand der Technik bekannt, von denen eine ausreichende Rückkopplung auf das Kupplungspedal ausgeht, so dass der Einrück- und Ausrückvorgang vom Fahrer gezielt der jeweiligen Situation angepasst werden kann. Hierbei ist es von erhöhter Bedeutung, einen Spiel- und Verschleißausgleich zu realisieren, um ein übereinstimmendes Ansprechverhalten während der Lebensdauer der Kupplung zu gewährleisten.

So sind aus dem Stand der Technik Ausrückzylinder bekannt, in denen ein automatischer Verschleißausgleich realisiert ist. Der Ausrückzylinder kann in einem solchen Fall zwei Kolben aufweisen, deren axialer Abstand durch das Volumen einer zwischen den Kolben befindlichen Flüssigkeit bestimmt wird, wobei eine Anpassung des Volumens in Abhängigkeit vom Verschleißzustand der Kupplung erfolgt.

Bei abgestelltem Fahrzeug besteht jedoch die Gefahr, dass bei undichtem Arbeitsventil Hydraulikflüssigkeit über eine Ausgleichsbohrung in den Zwischenraum zwischen Primär- und Sekundärkolben einströmt und über die Volumenzunahme den Sekundärkolben verschiebt, so dass ein langsames Öffnen der Kupplung nicht sicher ausgeschlossen werden kann, wodurch sich das Fahrzeug bei geöffneter Feststellbremse ungewollt in Bewegung setzen könnte.

EP 0 984 185 offenbart einen Hidraulikkreis mit dem Merkmalen des Obenbegriffs der Ansprüche 1 und 7.

In der DE 197 17 486 C2 wird ein pneumatischer Druckverstärker für eine hydraulische Kupplungsbetätigung für Kraftfahrzeuge beschrieben. Im Druckverstärker ist ein pneumatischer Arbeitsraum vorgesehen, der zur Druckverstärkung eines hydraulischen Arbeitsraumes mit Druckluft beaufschlagbar ist. Ein dem pneumatischen Arbeitsraum zugeordneter, dem Zu- und Abschalten der Druckverstärkungsquelle dienender Steuerkolben wird von einem im Hydraulikkreis befindlichen Arbeitskolben aktiviert, so dass ein auf Leckagen beruhender Druckanstieg im Ausrückzylinder unterbleibt.

Der Pneumatikverstärker der beschriebenen Vorrichtung verfügt jedoch über einen komplizierten Aufbau und ist insoweit auch bedingt störanfällig sowie vergleichsweise teuer in der Herstellung.

Der Erfindung liegt daher die Aufgabe zugrunde, mit vergleichsweise einfachen Mitteln die Funktionssicherheit einer Betätigung im Hydraulikkreis einer hydraulischen Kupplung zu erhöhen.

Erfindungsgemäß ist bei einer Einrichtung gemäß dem Oberbegriff des Anspruchs 1 dem Druckspeicher eine Drucküberwachungs- und Druckversorgungseinrichtung zugeordnet, die einen Referenz-Betriebsdruck und einen Differenzdruck ermittelt, um den bei Stillstand des Fahrzeuges und abgeschaltetem Motor der Betriebsdruck zur Erzielung eines verbleibenden Ruhedruckes reduziert wird.

Die Erfindung ist mit dem Vorteil verbunden, dass bei erneutem Start nach Abstellen des Fahrzeuges mit abgeschaltetem Motor in Folge des stetig bereitgestellten Ruhedruckes eine schnelle Verfügbarkeit der hydraulischen Kupplung gegeben ist und gleichzeitig die Beanspruchung des Druckspeichers reduziert wird, da dieser nicht dem vollen Betriebsdruck ausgesetzt ist. Insbesondere wenn der Druckspeicher als Membranspeicher ausgelegt ist, kann der permanent anliegende volle Betriebsdruck zu einer verstärkten Diffusion des Betriebsmediums führen. Erhöhte Betriebs- und Wartungskosten wären die Folge. Darüber hinaus wird gewährleistet, dass bei anliegendem Ruhedruck die Kupplung nicht öffnet bzw. nur soweit öffnen kann, dass ein genügend hohes Restmoment an der Kupplung erhalten bleibt, so dass das Fahrzeug nicht wegrollt.

In bevorzugter Ausgestaltung der Erfindung weist die erfindungsgemäße Einrichtung eine Druckbegrenzungseinheit auf, die eine Einstellung und Begrenzung des Ruhedruckes, bezogen auf einen Maximalwert ermöglicht, der bei Wirkung auf das zwischen Primärkolben und Sekundärkolben befindliche Flüssigkeitsvolumen nur eine solche Verschiebung des Sekundärkolbens des Ausrückzylinders zulässt, dass der Anpressdruck der Kupplungsdruckplatte an die Kupplungsscheibe noch ausreicht, um das Fahrzeug im Stillstand zu halten. Somit ist gewährleistet, dass bei eingelegtem Gang und gelöster Feststellbremse auch auf geneigter Fahrbahn das Fahrzeug in der betreffenden Position gehalten wird.

Zur Ermittlung des maximal zulässigen Ruhedruckes besteht die Möglichkeit, die Relativverschiebung der den Ausrückhebel der Kupplung betätigenden Kolbenstange zu nutzen. So kann die Kolbenstange mit einem inkrementalen Wegmeßsystem in Wirkverbindung stehen, von dem die Information über den zurückgelegten Weg der Kolbenstange als Regelgröße an die Drucküberwachungs- und Druckversorgungseinrichtung zur Festlegung der funktionalen Abhängigkeit des Ruhedruckes von der axialen Verschiebung der Kolbenstange weitergeleitet wird.

Weiterhin ist es grundsätzlich möglich, das Formänderungsverhalten der Kupplungsfeder zu erfassen und in Relation zu dem jeweils vorherrschenden Druck zu setzen.

Um zu vermeiden, dass der gewählte Ruhedruck infolge innerer Leckagen im Hydraulikkreis absinkt, was zu einer Verzögerung der Verfügbarkeit des Fahrzeuges nach einem betriebslosen Zeitraum führen würde, ist in zweckmäßiger Ausgestaltung der Erfindung der Drucküberwachungs- und Druckversorgungseinrichtung ein Triggerelement zugeordnet, das vorzugsweise zeitgesteuert eine Überprüfung des Ruhedruckes auslöst. Eine Korrektur des Ruhedruckes wird zweckmäßig bei Unterschreiten eines als zulässig erachteten Referenzdruckes erfolgen. Für die Triggerung muss die zugehörige Elektronik immer nur kurzzeitig aktiviert werden, beispielsweise einmal pro Stunde, was nur einen unwesentlichen Energieverbrauch zur Folge haben wird. Sollte der Druck den bestimmten vorgegebenen Wert unterschreiten, dann kann die Pumpe oder eine sonstige Vorrichtung zur Erzeugung des Betriebsdrucks so lange betrieben werden, bis der erforderliche Betriebsdruck wieder hergestellt ist. Für den Fahrer kann eine entsprechende Information bereitgestellt werden, falls die Leckrate im Hydrauliksystem auf einen signifikanten Fehler im System hindeutet, was erkennbar ist, wenn der Druckabfall über der Zeit einen bestimmten Wert überschreitet.

Soll die Möglichkeit ausgeschlossen werden, dass unter Einwirkung des Ruhedruckes auf den Ausrückzylinder eine Volumenvergrößerung zwischen Primär- und Sekundärkolben und damit eine Kraftwirkung auf den Ausrückhebel der Kupplung entsteht, die zu einer Herabsetzung des übertragbaren Drehmomentes und zu einem teilweisen Öffnen der Kupplung führt, so kann in Ausgestaltung der Erfindung über die Ansteuerung eines Arbeitsventils der Primärkolben soweit verschoben werden, dass eine mit dem Ausgleichsvolumen kommunizierende Ausgleichsbohrung verschlossen wird. Bei der Volumenvergrößerung im Zwischenraum besteht auch die Gefahr, dass bei einer Betätigung der Kupplung die Membranfeder zwischen den beiden Kolben überdrückt und zerstört werden könnte und dass die Kupplung nicht mehr bzw. nur stark verzögert wieder schließt.

Der Primärkolben des Ausrückzylinders wird bei geschlossener Kupplung derart positioniert, dass die Ausgleichsbohrung vom Primärkolben verschlossen ist, so dass auf das zwischen Primär- und Sekundärkolben befindliche Flüssigkeitsvolumen keine Volumenveränderung einwirkt.

Um einen Verschleißausgleich der Kupplung zuzulassen, wird die Drucksteuereinheit durch eine Triggerschaltung in bevorzugter Ausgestaltung der Erfindung kurzzeitig deaktiviert, so dass vom Primärkolben des Ausrückzylinders die Ausgleichsbohrung zu dem zwischen dem Primär- und dem Sekundärkolben befindlichen Raum für einen Volumenausgleich freigegeben wird. Durch die Triggerung wird sichergestellt, dass ein Öffnen der Ausgleichsbohrung nicht bei jeder Kupplungsbetätigung erfolgen muss, sondern nur ab und zu und dennoch ein ausreichender Verschleißausgleich erfolgt und die oben beschriebenen Gefahren vermieden werden. Auch eine getriggerte Wegmessung des Kolbens kann sicherstellen, dass das Fahrzeug nicht wegrollt. Eine Verstellung der Kupplung würde erfasst und der Ruhedruck angepasst.

Die Erfindung soll nachfolgend anhand eines bevorzugten Ausführungsbeispieles und zugehörigen Zeichnungen näher erläutert werden.
Es zeigen:
- Fig. 1: den prinzipiellen Aufbau einer hydraulischen Kupplungsbetätigungsvorrichtung mit einem pneumatischem Verstärker,
- Fig. 2: einen Ausrückzylinder der Kupplungsbetätigung gemäß Fig. 1 mit Primär- und Sekundärkolben und
- Fig. 3: eine Darstellung des Ausrückzylinders mit symbolischer Anbindung einer Drucküberwachungs- und Druckversorgungseinrichtung und einer Drucksteuereinheit.

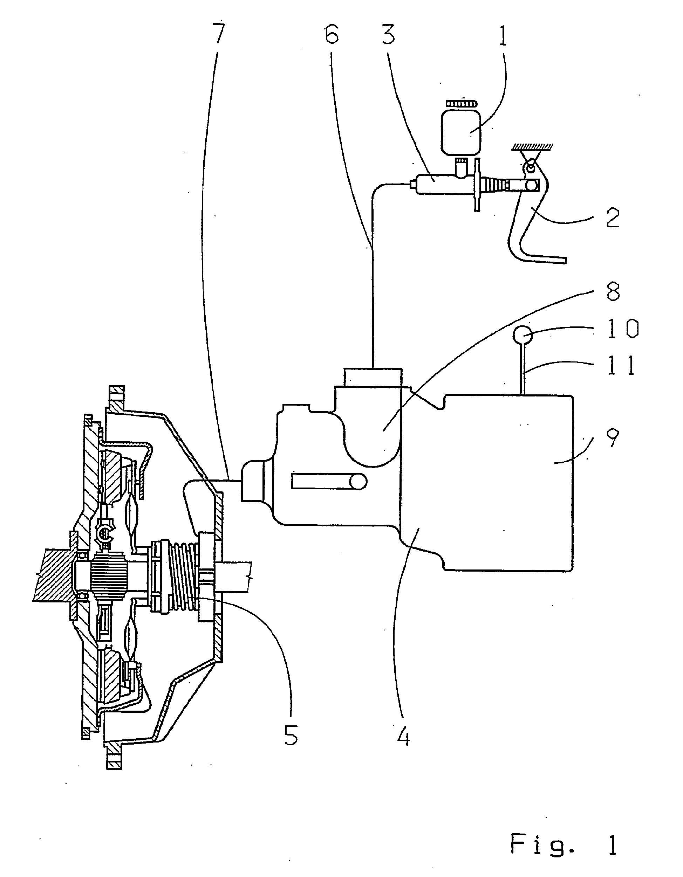

Eine hydraulische Kupplungsbetätigungsvorrichtung mit pneumatischem Verstärker besteht gemäß Fig. 1 im wesentlichen aus einem mit einem Ausgleichsbehälter 1 versehenen und von einem Kupplungspedal 2 betätigten Geberzylinder 3, einem dem Geberzylinder nachgeordneten Druckverstärker 4, einem auf den Ausrückmechanismus der Kupplung wirkenden Ausrückzylinder 5 und aus Hydraulikleitungen 6 und 7, die eine flüssigkeitsdichte Verbindung zwischen Geberzylinder 3 und Druckverstärker 4 sowie zwischen Druckverstärker 4 und Ausrückzylinder 5 herstellen.

Der Druckverstärker 4 weist einen auf den Hydraulikbereich 8 und die angrenzenden Hydraulikleitungen 6,7 wirkenden Pneumatikbereich 9 auf, der im aktiven Zustand mit einem komprimierten Gas beaufschlagt ist, das von einem Verdichter 10 über eine Pneumatikleitung 11 bereitgestellt wird.

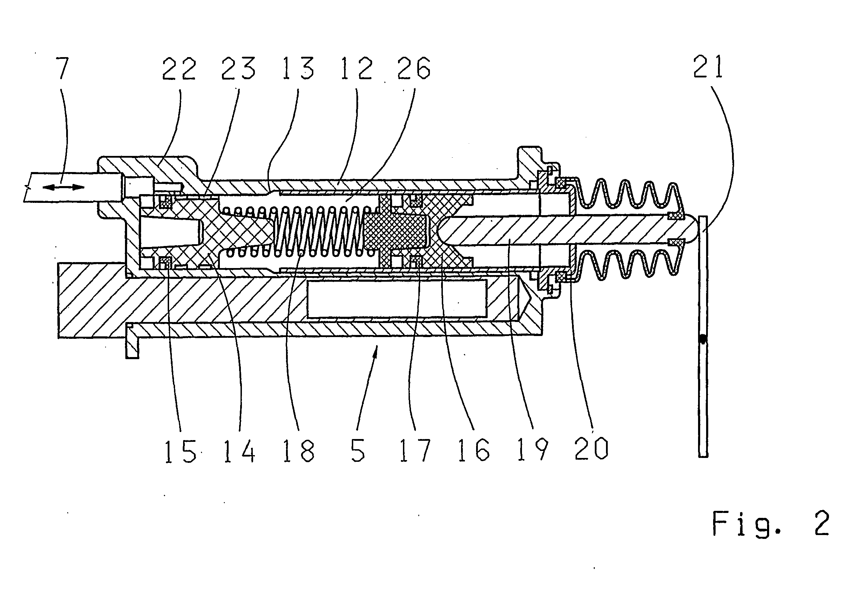

Der Ausrückzylinder 5 ist in Fig. 2 im nicht angesteuerten Zustand dargestellt. Das im wesentlichen zylinderförmig ausgebildete Gehäuse 12 ist mit einer Stufenbohrung 13 versehen, in der ein Primärkolben 14 mit einem Dichtring 15 sowie ein Sekundärkolben 16 mit einem Dichtring 17 axial verschiebbar angeordnet sind. Eine Beabstandung zwischen Primärkolben 14 und Sekundärkolben 16 und damit die konstruktive Möglichkeit der Schaffung eines Freiraumes für einen automatischen Verschleißausgleich von Teilen der Kupplung wird durch eine Schraubenfeder 18 erreicht, die die Annäherung des Sekundärkolbens 16 an den Primärkolben 14 bei Druckentlastung des Primärkolbens 14 begrenzt. Der Sekundärkolben 16 wirkt auf eine Kolbenstange 19, die in einer Ausnehmung einer Stirnplatte 20 des Ausrückzylinders 5 geführt ist und sich zum Ausrückhebel 21 der Kupplungsbetätigung erstreckt. Zum Schutz der Kolbenstange 19 ist diese von einem Faltenbalg umschlossen, der mit seinem einen Endbereich auf der Stirnplatte 20 des Gehäuses 12 sitzt.

An dem der Kolbenstange 19 abgewandten Ende des Gehäuses 12 ist die Hydraulikleitung 7 flüssigkeitsdicht mit einem Anschlussbereich 22 des Gehäuses 12 verbunden. Eine im Anschlussbereich 22 vorgesehene Ausgleichsbohrung 23 stellt bei endseitigem Anschlag des Primärkolbens 14 eine Verbindung der Hydraulikleitung 7 mit dem Ausgleichsraum 26 zwischen Primärkolben 14 und Sekundärkolben 16 her, so dass die im Ausgleichsraum 26 zwischen dem Primärkolben 14 und dem Sekundärkolben 16 befindliche Flüssigkeit mit der über die Hydraulikleitung 7 bereitgestellten Flüssigkeit kommuniziert. Durch Variation des zwischen Primärkolben 14 und Sekundärkolben 16 eingeschlossenen Flüssigkeitsvolumens kann der Abstand der Kolben 14 und 16 zueinander verändert und damit ein Verschleißausgleich im Bereich der Kupplung erreicht werden.

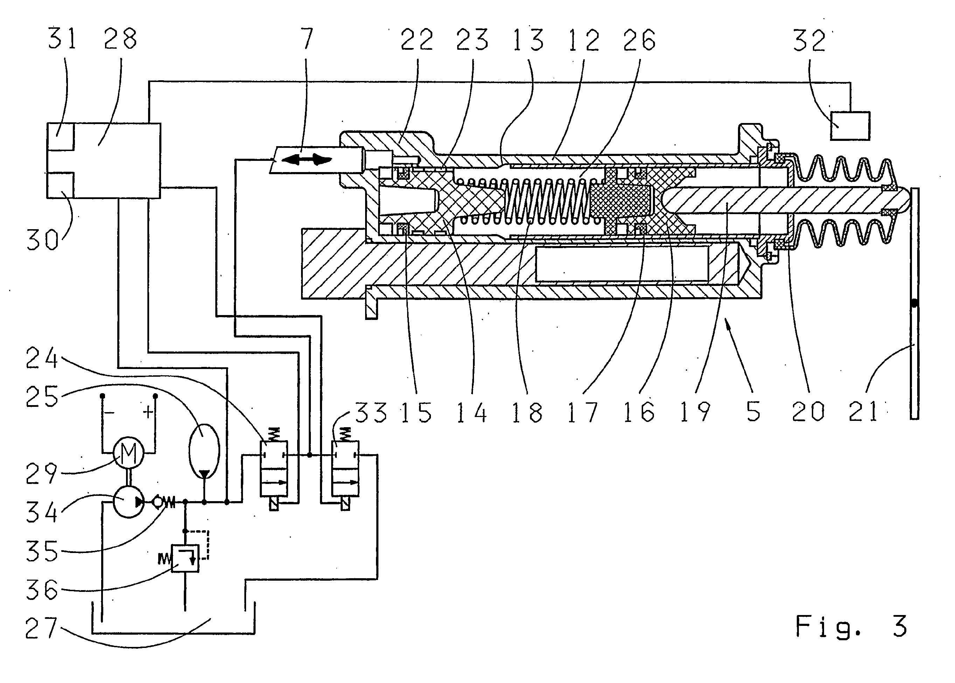

Wie Fig. 3 zeigt, wird der Ausrückzylinder 5 der hydraulischen Kupplungsbetätigung von einem als 2/2-Wegesitzventil ausgebildeten Arbeitsventil 24 angesteuert, das in einem seiner Schaltzustände den von einem Druckspeicher 25 ausgehenden hydraulischen Systemdruck an den Anschlussbereich 22 des Ausrückzylinders 5 weitergibt, wonach der Primärkolben 14 axial aus seiner Endlage verschoben wird und die Ausgleichsbohrung 23 verschließt. Über die im Ausgleichsraum 26 zwischen Primärkolben 14 und Sekundärkolben 16 befindliche, volumenkonstante Flüssigkeit folgen der Bewegung des Primärkolbens 14 sowohl der Sekundärkolben 16 als auch die Kolbenstange 19, wodurch der Ausrückhebel 21 betätigt und die Kupplung geöffnet wird.

Eine von einem Motor 29 angetriebene Pumpe 34 fördert aus dem Tank 27 Hydraulikflüssigkeit über ein Rückschlagventil 35 in Richtung auf den Druckspeicher 25. Damit der Druck im System überwacht wird ist ein Druckbegrenzungsventil 36 vorgesehen, das gegebenenfalls Hydraulikflüssigkeit in den Tank 27 zurückfließen lässt.

Beim Schließen der Kupplung bewegt sich der federbelastete Ausrückhebel 21 in seine in Fig. 3 dargestellte Ausgangslage zurück und erzeugt dabei eine axiale Bewegung von Sekundärkolben 16, eingeschlossener Hydraulikflüssigkeit und Primärkolben 14 nach links, bis letzterer seine Endlage im Gehäuse 12 des Ausrückzylinders erreicht hat. Dabei befindet sich ein als 2/2-Wegesitzventil ausgebildetes Arbeitsventil 33 in einer Schaltstellung, in der ein Volumenrückstrom in den Tank 27 erfolgen kann. Angepasste Schaltstellungen der Arbeitsventile 24 und 33 erlauben überdies in Endlage des Primärkolbens 14 einen Ölvolumenausgleich über die vom Primärkolben 14 freigegebene Ausgleichsbohrung 23 und damit eine Anpassung der Kupplungsbetätigung an das Verschleißverhalten der Kupplung.

Wird das Fahrzeug abgestellt und der Motor abgeschaltet, erhält eine Drucküberwachungs- und Druckversorgungseinrichtung 28 eine entsprechende Information, auf Grundlage derer die Überwachungs- und Druckversorgungseinrichtung 28 den Systemdruck ermittelt und um einen Differenzdruck reduziert, so dass beispielsweise bei eingelegtem Gang und geöffneter Feststellbremse auch auf geneigter Fahrbahn ein Wegrollen des Fahrzeuges verhindert wird und eine schnelle Verfügbarkeit der Kupplungsbetätigung gleichwohl aber weiterhin gewährleistet ist.

Hierfür stellt die Überwachungs- und Druckversorgungseinrichtung 28 sicher, dass der in der Überwachungs- und Druckversorgungseinrichtung 28 aus System- und Differenzdruck ermittelte Druck auf einen Ruhedruck begrenzt wird, der bei Wirkung auf den Sekundärkolben 16 und damit auf Kolbenstange 19 und Ausrückhebel 21 nicht zu einem teilweisen Lösen der Kupplung führen kann. Ein solcher Fall könnte immer dann eintreten, wenn durch Fehler im System, beispielsweise bei nicht exakt schließendem Arbeitsventil 24, ein langsamer Druckaufbau am Ausrückzylinder 5 erfolgt, der bei geöffneter Ausgleichsbohrung 23 zu einer Volumenvergrößerung des flüssigkeitsgefüllten Ausgleichsraumes 26 zwischen Primärkolben 14 und Sekundärkolben 16 führen würde.

Deshalb wird durch entsprechende minimale Ansteuerung eines Schaltelementes, beispielsweise des Arbeitsventils 24, mittels einer in der Drucküberwachungs- und Druckversorgungseinrichtung 28 vorgesehenen Drucksteuereinheit 30 durch den entstehenden Druck am Ausrückzylinder 5 der Primärkolben 14 in Richtung des Zustandes "Kupplung öffnen" verschoben und dadurch die Ausgleichsbohrung 23 geschlossen gehalten, während die Kupplung geschlossen bleibt. Alternativ könnte der Primärkolben 14 im Zustand "Kupplung geschlossen" immer soweit vorgefahren werden, dass die Ausgleichsbohrung 23 verschlossen ist. Dann wird nur jeweils nach einer Kupplungsbetätigung der Primärkolben kurzzeitig bis an den Anschlag zurückgefahren und die Ausgleichsbohrung 23 geöffnet, um anschließend wieder in die Position gebracht zu werden, in der die Ausgleichsbohrung 23 verschlossen ist. Da der Kupplungsverschleiß pro Kupplungsvorgang gering ist, reicht diese Methode aus, um einen sicheren Verschleißausgleich zu ermöglichen und die Ausgleichsbohrung 23, wenn ihre Funktion nicht benötigt wird, zu verschließen. Damit wird ein unkontrollierter Ölfluss in den Zwischenraum zwischen Primär- und Sekundärkolben 14, 16 sicher verhindert.

Als weitere Alternative kann die Volumenänderung zwischen dem Primärkolben 14 und dem Sekundärkolben 16 und damit ein Verschleißausgleich der Kupplung auch durch eine Triggerschaltung 31 erfolgen, die ebenfalls in der Drucküberwachungs- und Druckversorgungseinrichtung 28 angeordnet sein kann und die in bestimmten Abständen den Verschluss der Ausgleichsbohrung 23 durch den Primärkolben 14 kurzzeitig deaktiviert, so dass ein Volumenaustausch stattfinden kann.

Zudem steht Überwachungs- und Druckversorgungseinrichtung 28 mit einem inkrementalen Wegsensor 32 in Verbindung, von dem die Information über den zurückgelegten Weg der Kolbenstange 19 als Regelgröße an die Drucküberwachungs- und Druckversorgungseinrichtung 28 zur Festlegung der funktionalen Abhängigkeit des Ruhedruckes von der axialen Verschiebung der Kolbenstange 19 weitergeleitet wird.

Die Drucksteuereinheit 30 kann derart ausgelegt sein, dass sie unabhängig von der Drucküberwachungs- und Druckversorgungseinrichtung 28 arbeitet, so dass sie bei geschlossener Kupplung unter verschiedenen Einsatzbedingungen, so auch bei laufendem Motor, aktiv ist.

### Bezugszeichen

- 1: Ausgleichsbehälter
- 2: Kupplungspedal
- 3: Geberzylinder
- 4: Druckverstärker
- 5: Ausrückzylinder
- 6: Hydraulikleitung
- 7: Hydraulikleitung
- 8: Hydraulikbereich
- 9: Pneumatikbereich
- 10: Verdichter
- 11: Pneumatikleitung
- 12: Gehäuse
- 13: Stufenbohrung
- 14: Primärkolben
- 15: Dichtring
- 16: Sekundärkolben
- 17: Dichtring
- 18: Schraubenfeder
- 19: Kolbenstange
- 20: Stirnplatte
- 21: Ausrückhebel
- 22: Anschlussbereich
- 23: Ausgleichsbohrung
- 24: Arbeitsventil
- 25: Druckspeicher
- 26: Ausgleichraum
- 27: Tank
- 28: Drucküberwachungs- und Druckversorgungseinrichtung
- 29: Motor
- 30: Drucksteuereinheit
- 31: Triggerschaltung
- 32: Wegsensor
- 33: Arbeitsventil
- 34: Pumpe
- 35: Rückschlagventil
- 36: Druckbegrenzungsventil

## Patentansprüche

1. Einrichtung zur Erhöhung der Funktionssicherheit für einen Hydraulikkreis einer hydraulisch betätigbaren Kupplung, die einen Ausrückzylinder (5) aufweist, der von einem Geberzylinder (3) über Hydraulikleitungen (6, 7) betätigt wird, und der über einen Primärkolben (14) und einen Sekundärkolben (16) mit variabler Beabstandung der Kolben (14, 16) zum Verschleißausgleich verfügt, mit einem Druckspeicher (25) und mit einer Druckspeicherbefülleinrichtung, **dadurch gekennzeichnet, dass** dem Druckspeicher (25) eine Drucküberwachungs- und Druckversorgungseinrichtung (28) zugeordnet ist, die im Betätigungssystem einen Referenz-Betriebsdruck und einen Differenzdruck ermittelt, um den bei Stillstand des Fahrzeuges und abgeschaltetem Motor der Betriebsdruck zur Erzielung eines verbleibenden Ruhedruckes reduziert wird.

2. Einrichtung nach Anspruch 1, **dadurch gekennzeichnet, dass** diese Einrichtung eine Druckbegrenzungseinheit (29) aufweist, die eine Einstellung und Begrenzung des Ruhedruckes bezogen auf einen Maximalwert ermöglicht, der bei Einwirkung auf das zwischen dem Primärkolben (14) und dem Sekundärkolben (16) befindliche Flüssigkeitsvolumen nur eine solche Verschiebung des Sekundärkolbens (16) des Ausrückzylinders (5) zulässt, dass der Anpressdruck einer Kupplungsandruckplatte der Kupplung auf eine Kupplungsscheibe noch ausreicht, um das Fahrzeug im Stillstand bei eingelegtem Getriebegang, gelöster Fahrzeugfeststellbremse und geneigter Fahrbahn am Wegrollen zu hindern.

3. Einrichtung nach Anspruch 2, **dadurch gekennzeichnet, dass** indirekte, nicht auf den im Betätigungssystem herrschenden Ruhedruck zurückgehende Parameter als Regelgröße an die Drucküberwachungs- und Druckversorgungseinrichtung (28) zur Festlegung der funktionalen Abhängigkeit des Ruhedruckes von den entsprechenden Parametern weitergeleitet werden.

4. Einrichtung nach Anspruch 1 oder 3, **dadurch gekennzeichnet, dass** der Drucküberwachungs- und Druckversorgungseinrichtung (28) ein Triggerelement (31) zugeordnet ist, das vorzugsweise zeitgesteuert eine Überprüfung des Ruhedruckes auslöst.

5. Einrichtung nach wenigstens einem der vorherigen Ansprüche, **dadurch gekennzeichnet, dass** der Primärkolben (14) und der Sekundärkolben (16) im Ausrückzylinder (5) durch einen Ausgleichsraum (26) mit variablen Volumen beabstandet sind.

6. Einrichtung nach wenigstens einem der vorherigen Ansprüche, **dadurch gekennzeichnet, dass** über eine Ansteuerung eines Arbeitsventils (24) der Primärkolben (14) im Ausrückzylinder (5) soweit verschiebbar ist, dass eine mit dem Ausgleichsraum (26) kommunizierende Ausgleichsbohrung (23) im Ausrückzylinder (5) verschlossen wird.

7. Einrichtung zur Erhöhung der Funktionssicherheit für einen Hydraulikkreis einer hydraulisch betätigbaren Kupplung, die einen Ausrückzylinder (5) aufweist, der von einem Geberzylinder (3) über Hydraulikleitungen (6, 7) betätigt wird, und der über einen Primärkolben (14) und einen Sekundärkolben (16) mit variabler Beabstandung der Kolben (14, 16) zum Verschleißausgleich verfügt, mit einem Druckspeicher (25) und einer Druckspeicherbefülleinrichtung, und bei der auf ein Schaltelement (24) derart eingewirkt wird, dass der Primärkolben (14) geringfügig axial in eine Lage verschoben wird, in der eine Volumenänderung eines zwischen dem Primärkolben (14) und dem Sekundärkolben (16) befindlichen Ausgleichsraums (26) ausgeschlossen ist, **dadurch gekennzeichnet, dass** dem Druckspeicher (25) eine Drucküberwachungs- und Druckversorgungseinrichtung (28) und eine Drucksteuereinheit (30) zugeordnet sind, und die Drucksteuereinheit (30) in bestimmten Zeitabständen durch eine Triggerschaltung (31) kurzzeitig deaktivierbar ist, so dass ein Verschleißausgleich über eine Änderung des zwischen Primärkolben (14) und Sekundärkolben (16) im Ausgleichsraum (26) eingeschlossenen Hydraulikvolumens erfolgen kann.

## Claims

1. Installation for increased functional safety of the hydraulic circuit of a hydraulically actuated clutch featuring a release cylinder (5), which is actuated by a master cylinder (3) via hydraulic lines (6, 7) and which features a primary piston (14) and a secondary piston (16) with variable distances between the pistons (14, 16) for wear compensation, equipped with a pressure accumulator (25) and a pressure accumulator filling device, **characterized in that** the pressure accumulator (25) has a pressure monitoring and supply device (28) assigned to it, which checks the actuation system to determine a reference operating pressure and a differential pressure by which during vehicle standstill and turned-off engine the operating pressure is reduced for attainment of a resting pressure.

2. Installation according to claim 1, **characterized in that** this installation features a pressure-limiting unit (29) which permits adjustment and limitation of the resting pressure relative to a maximum value, which when acting on the liquid volume between primary piston (14) and secondary piston (16) permits displacement of the secondary piston (16) of the release cylinder (5) only to such an extent that the pressure of a clutch pressure plate of the clutch exerted on a clutch disk is just about sufficient to prevent a vehicle standing still on a sloping roadway with engaged gear and released parking brake from rolling.

3. Installation according to claim 2, **characterized in that** indirect parameters not resulting from the resting pressure prevailing in the actuation system are transmitted as controlled variables to the pressure monitoring and supply device (28) for determination of the functional dependence of the resting pressure on the respective parameters.

4. Installation according to claim 1 or 3, **characterized in that** the pressure monitoring and supply device (28) has a trigger element (31) assigned to it which chiefly time-controlled triggers a check of the resting pressure.

5. Installation according to at least one of the preceding claims, **characterized in that** primary piston (14) and secondary piston (16) in the release cylinder (5) are apart by the distance created by a compensating chamber (26) with variable volume.

6. Installation according to at least one of the preceding claims, **characterized in that** - controlled by a power valve (24) - the primary piston (14) in the release cylinder (5) is displacable to such an extent that a compensating bore (23) communicating with the compensating chamber (26) in the release cylinder (5) is dosed.

7. Installation for increased functional safety of the hydraulic circuit of a hydraulically actuated clutch featuring a release cylinder (5), which is actuated by a master cylinder (3) via hydraulic lines (6, 7) and which features a primary piston (14) and a secondary piston (16) with variable distances between the pistons (14, 16) for wear compensation, equipped with a pressure accumulator (25) and a pressure accumulator filling device, and with a switch element (24) being actuated in such a manner that the primary piston (14) is slightly axially displaced into a position in which volume change of a compensating chamber (26) arranged between primary piston (14) and secondary piston (16) is precluded, **characterized in that** the pressure accumulator (25) has a pressure monitoring and supply device (28) and a pressure control unit (30) assigned to it, and that the pressure control unit (30) can be briefly deactivated at specific intervals by means of a trigger circuit (31) so that wear compensation is possible by means of a change of the hydraulic volume contained in the compensating chamber (26) between primary piston (14) and secondary piston (16).

## Revendications

1. Dispositif pour l'accroissement de la sécurité de fonctionnement pour un circuit hydraulique appartenant à un embrayage à actionnement hydraulique qui possède un cylindre de débrayage (5) actionné par un cylindre émetteur (3) par l'intermédiaire de conduites hydrauliques (6, 7) et comportant un piston primaire (14) et un piston secondaire (16), avec écartement variable entre les pistons (14, 16) pour la compensation de l'usure, le dispositif comprenant un accumulateur de pression (25) et un dispositif de remplissage de l'accumulateur de pression, **caractérisé en ce qu'**à l'accumulateur de pression (25) est associé un dispositif de surveillance de la pression et d'alimentation en pression (28) qui détermine dans le système d'actionnement une pression de service de référence et une pression différentielle dont la pression de service est abaissée lorsque le véhicule est à l'arrêt et le moteur coupé pour donner une pression de repos restante.

2. Dispositif selon la revendication 1, **caractérisé en ce que** ce dispositif comporte une unité de limitation de la pression (29) qui permet un réglage et une limitation de la pression de repos, rapportée à une valeur maximale qui, lorsque le volume de liquide présent entre le piston primaire (14) et le piston secondaire (16) subit une influence, permet seulement une translation du piston secondaire (16) du cylindre de débrayage (5) telle que la pression d'application d'un plateau de pression de l'embrayage sur un disque d'embrayage soit encore suffisante pour empêcher le véhicule, arrêté avec une vitesse enclenchée dans la boîte de vitesses, le frein de stationnement du véhicule desserré et la chaussée en pente, de se mettre à rouler seul.

3. Dispositif selon la revendication 2, **caractérisé en ce que** des paramètres indirects qui ne sont pas liés à la pression de repos régnant dans le système d'actionnement sont transmis en tant que variables au dispositif de surveillance de la pression et d'alimentation en pression (28) pour fixer la dépendance fonctionnelle de la pression de repos vis-à-vis des paramètres correspondants.

4. Dispositif selon la revendication 1 ou 3, **caractérisé en ce que** le dispositif de surveillance de la pression et d'alimentation en pression (28), est associé un élément déclencheur (31) qui déclenche une surveillance de la pression de repos, de préférence avec temporisation.

5. Dispositif selon au moins l'une des revendications précédentes, **caractérisé en ce que**, dans le cylindre de débrayage (5), le piston primaire (14) et le piston secondaire (16) sont séparés l'un de l'autre par une chambre de compensation (26) à volume variable.

6. Dispositif selon au moins l'une des revendications précédentes, **caractérisé en ce que** le piston primaire (14) peut être déplacé dans le cylindre de débrayage (5), sous l'effet du pilotage d'une soupape de travail (24), assez loin pour fermer un perçage de compensation (23) ménagé dans le cylindre de débrayage (5) et qui communique avec la chambre de compensation (26).

7. Dispositif pour l'accroissement de la sécurité de fonctionnement pour un circuit hydraulique appartenant à un embrayage à actionnement hydraulique qui possède un cylindre de débrayage (5) actionné par un cylindre émetteur (3) par l'intermédiaire de conduites hydrauliques (6, 7) et présentant un piston primaire (14) et un piston secondaire (16), avec écartement variable entre les pistons (14, 16) pour la compensation de l'usure, le dispositif comprenant un accumulateur de pression (25) et un dispositif de remplissage de l'accumulateur de pression, et dans lequel un élément de commande (24) subit une action telle que le piston primaire (14) soit légèrement repoussé axialement jusqu'à une position dans laquelle une variation du volume d'une chambre de compensation (26) située entre le piston primaire (14) et le piston secondaire (16) est exclue, **caractérisé en ce qu**'à l'accumulateur de pression (25) sont associés un dispositif de surveillance de la pression et d'alimentation en pression (28) et une unité de commande de la pression (30), et l'unité de commande de la pression (30) peut être désactivée brièvement à des intervalles de temps déterminés par un circuit de déclenchement (31), de telle manière qu'une compensation de l'usure puisse être réalisée par une modification du volume hydraulique enfermé dans la chambre de compensation (26) entre le pison primaire (14) et le piston secondaire (16).
